# EUROPÄISCHE PATENTANMELDUNG

(11) **EP 4 657 692 A1**
(43) Veröffentlichungstag der Anmeldung: **03.12.2025**
(21) Anmeldenummer: 24178283.8
(22) Anmeldetag: 27.05.2024
(51) Int. Cl.: H02J 3/14, H02J 13/00

(54) **STEUERSYSTEM UND VERFAHREN ZUM STEUERN EINES LOKALEN STROMNETZES**

(71) Anmelder: FRONIUS INTERNATIONAL GmbH, 4643 Pettenbach (AT)
(72) Erfinder: WOLF, Martin, 4643 Pettenbach (AT); MÜHLEGGER, Johannes, 4643 Pettenbach (AT); HÜTTNER, Thomas, 4643 Pettenbach (AT); WINDISCH, Philipp, 4643 Pettenbach (AT); STRUTZENBERGER, Odilo, 4643 Pettenbach (AT)
(74) Vertreter: Bratovic, Nino Maria

(57) **Zusammenfassung**

Die Erfindung schafft ein Verfahren sowie ein Steuersystem zum Steuern eines lokalen Stromnetzes (1), welches an einem Netzanschlusspunkt (2) mit einem öffentlichen Stromversorgungsnetz (3) verbunden ist. Das Steuersystem (100) umfasst:
eine Laststeuereinrichtung (110), welche dazu eingerichtet ist, einen Leistungsverbrauch und/oder eine Leistungsabgabe von steuerbaren elektrischen Lasten und/oder steuerbaren elektrischen Quellen (140-180) des lokalen Stromnetzes (1) zu steuern; und
eine Recheneinrichtung (120), welche dazu eingerichtet ist, ein Anforderungssignal (71) von außerhalb des lokalen Stromnetzes (1) zu empfangen, wobei das Anforderungssignal eine Information über einen Leistungstransfer in mindestens einem Zeitraum umfasst;
wobei die Recheneinrichtung (120) weiterhin dazu eingerichtet ist, Steuersignale (72) zu erzeugen, welche dazu ausgebildet sind, die Laststeuereinrichtung (110) anzuweisen, die steuerbaren elektrische Lasten und/oder elektrischen Quellen (140-180) des lokalen Stromnetzes (1) derart zu steuern, dass in dem mindestens einen Zeitraum an dem Netzanschlusspunkt (2) ein Leistungstransfer (81) gemäß dem Anforderungssignal (71) bereitgestellt wird

## Beschreibung

### Gebiet der Erfindung

Die Erfindung betrifft ein Steuersystem und ein Verfahren zum Steuern eines lokalen Stromnetzes, insbesondere in einem Umfeld, indem ein virtueller Kraftwerksbetreiber (VPP, von Englisch "virtual power plant") elektrische Leistung von verschiedenen solchen lokalen Stromnetzen bezieht und/oder in solche lokale Stromnetze einspeist.

### Technischer Hintergrund

Der zunehmende Ausbau von erneuerbaren, häufig dezentral angeordneten Energieerzeugern eröffnet viele Chancen, bringt jedoch auch technische Hürden mit sich. Im Vergleich zur Verwendung von verhältnismäßig wenigen Energieerzeugern mit großer Leistung ist bei der Verwendung von verhältnismäßig vielen Energieerzeugern mit jeweils kleinerer Leistung der Erhalt der Netzstabilität eine größere Herausforderung.

Zu solchen Energieerzeugern gehören mitunter auch lokale Stromnetze, die jeweils an einem eigenen Netzanschlusspunkt an das öffentliche Stromnetz angeschlossen sind, und sowohl elektrische Quellen (d.h., Energiequellen) als auch elektrische Lasten (d.h., Energiesenken) umfassen. Typische Beispiele hierfür sind etwa Industrieanlagen oder private Haushalte mit Photovoltaik-(PV-)Anlagen. Ob ein solches lokales Stromnetz insgesamt als Energieerzeuger oder als Energieverbraucher (oder: als Quelle oder als Last) agiert, kann sich im Laufe der Zeit immer wieder ändern, und von vielfältigen Faktoren abhängen, nicht zuletzt von der Tages- oder Jahreszeit und dem eigenen Strombedarf.

Mehrere einzelne Energieerzeuger können zu einem virtuellen Kraftwerk (VPP, von englisch: "virtual power plant") zusammengeschlossen werden, unter anderem um die übergeordnete Kontrolle einfacher zu gestalten. Besondere Komplexität ergibt sich dadurch, dass häufig nur manche, aber nicht alle, elektrische Lasten oder Quellen der lokalen Stromnetze steuerbar sind. Zu den steuerbaren elektrischen Lasten/Quellen gehören beispielsweise - im Rahmen ihrer jeweiligen Kapazität - Batterien.

In bislang bekannten Verfahren kann ein VPP-Betreiber daher Anforderungssignale aussenden, mittels welchen ein Leistungstransfer einer Batterie in einem lokalen Stromnetz gesteuert wird, d.h., die Batterie von extern gesteuert wird, elektrische Leistung abzugeben (d.h. zu entladen) oder aufzunehmen (d.h. zu laden). Es ist jedoch häufig unerwünscht, sowohl für Privathaushalte als auch für Industrieanlagen, wenn derartige direkte Eingriffe von außen erfolgen.

### Zusammenfassung der Erfindung

Nach dem Vorangehenden ist es daher eine Aufgabe der vorliegenden Erfindung, ein verbessertes Steuersystem und ein verbessertes Verfahren zum Steuern eines lokalen Stromnetzes bereitzustellen.

Diese Aufgabe wird durch die Gegenstände der unabhängigen Patentansprüche gelöst.

Dementsprechend stellt die Erfindung, gemäß einem ersten Aspekt, ein Steuersystem zum Steuern eines lokalen Stromnetzes, welches an einem Netzanschlusspunkt mit einem öffentlichen Stromversorgungsnetz verbunden ist, bereit. Das Steuersystem umfasst zumindest:
eine Laststeuereinrichtung, welche dazu eingerichtet ist, einen Leistungsverbrauch und/oder eine Leistungsabgabe von steuerbaren elektrischen Lasten und/oder steuerbaren elektrischen Quellen des lokalen Stromnetzes zu steuern; und
eine Recheneinrichtung, welche dazu eingerichtet ist, ein Anforderungssignal von außerhalb des lokalen Stromnetzes zu empfangen, wobei das Anforderungssignal eine Information über einen Leistungstransfer in mindestens einem Zeitraum umfasst;
wobei die Recheneinrichtung weiterhin dazu eingerichtet ist, Steuersignale zu erzeugen, welche dazu ausgebildet ist, die Laststeuereinrichtung anzuweisen, die steuerbaren elektrische Lasten und/oder elektrischen Quellen des lokalen Stromnetzes derart zu steuern, dass in dem mindestens einen Zeitraum an dem Netzanschlusspunkt ein Leistungstransfer gemäß dem Anforderungssignal bereitgestellt wird.

Im Vergleich mit dem bekannten Stand der Technik wird somit mit dem Anforderungssignal nicht direkt auf eine Batterie eingewirkt, sondern eine Anforderung an ein Endergebnis übermittelt, und es der erfindungsgemäßen Laststeuereinrichtung überlassen, die genauen Steuersignale dafür zu erzeugen und zu übermitteln. Dies verbessert nicht nur die Zuverlässigkeit und Vorhersagbarkeit des Leistungstransfers an dem Netzanschlusspunkt, sondern ermöglicht auch eine harmonischere Steuerung und/oder Regelung innerhalb des lokalen Stromnetzes.

Die Information in dem Anforderungssignal über den Leistungstransfer in dem mindestens einem Zeitraum kann verschieden ausgebildet sein. Beispielsweise kann es sich um eine Information über einen geforderten Ziel-Leistungstransfer in dem Zeitraum handeln, oder um eine Information über eine gewünschte Anpassung eines prognostizierten Leistungstransfers als Funktion der Zeit in dem Zeitraum und/oder dergleichen mehr.

Das Steuern der steuerbaren elektrischen Lasten und/oder elektrischen Quellen erfolgt somit vorteilhaft dynamisch, das heißt, jeweils unter Berücksichtigung eines aktuellen Zustands des lokalen Stromnetzes.

Gemäß einigen bevorzugten Ausführungsformen, Varianten oder Verfeinerungen von Ausführungsformen ist die Laststeuereinrichtung dazu eingerichtet, in Abhängigkeit von den Steuersignalen mindestens eine energiespeicherfreie elektrische Last zu steuern. Beispielsweise kann ein Schalter der elektrischen Last geöffnet oder geschlossen werden, oder ein Stromverbrauch der elektrischen Last erhöht oder verringert werden. Bevorzugt kann dies unter Berücksichtigung von Anforderungen aus dem lokalen Stromnetz selbst erfolgen. Beispielsweise kann ein Benutzer der Laststeuereinrichtung mitteilen (z.B. anhand einer Prioritätenliste), dass eine bestimmte Last (z.B. eine Waschmaschine, eine Geschirrspülmaschine, eine Wallbox, einen Heizstab, einen Heizwiderstand, etc.) bei Gelegenheit eingeschaltet werden soll, woraufhin die Laststeuereinrichtung diese Last einschalten kann, etwa falls - basierend auf dem Anforderungssignal - der Leistungstransfer an dem Netzanschlusspunkt erhöht werden soll.

Hier und im Folgenden wird der Leistungstransfer immer aus der Sicht des lokalen Stromnetzes betrachtet werden. Ein Strombezug des lokalen Stromnetzes aus dem öffentlichen Stromnetz an dem Netzanschlusspunkt wird somit positiv gerechnet (Energie fließt in das lokale Stromnetz hinein), während eine Stromeinspeisung des lokalen Stromnetzes in das öffentliche Stromnetz an dem Netzanschlusspunkt als negativ gerechnet wird (Energie verlässt das lokale Stromnetz).

Ein Verringern des Leistungstransfers kann somit ein Verringern eines positiven Leistungstransfers hin zu einem geringeren positiven Leistungstransfer oder null (d.h. weniger Strom wird aus dem öffentlichen Stromnetz bezogen als vorher), ein Verändern von einem positiven Leistungstransfer oder null in einen negativen Leistungstransfer (es wird Strom in das öffentliche Stromnetz eingespeist statt daraus bezogen), oder ein Erhöhen des Betrags eines negativen Leistungstransfers (es wird mehr Strom in das öffentliche Stromnetz eingespeist als vorher, z.B. unter Entladung einer Batterie) beinhalten.

Dementsprechend kann ein Erhöhen des Leistungstransfers ein Verringern des Betrags eines negativen Leistungstransfers (es wird weniger Strom in das öffentliche Stromnetz eingespeist als vorher), ein Verändern des Leistungstransfers von einem negativen Wert auf null oder auf einen positiven Wert (die Strombilanz wird ausgeglichen bzw. es wird Strom bezogen statt eingespeist), oder ein Erhöhen des Betrags eines positiven Leistungstransfers beinhalten (es wird mehr Strom aus dem öffentlichen Stromnetz bezogen als vorher, z.B. unter Ladung einer Batterie).

Gemäß einigen bevorzugten Ausführungsformen, Varianten oder Verfeinerungen von Ausführungsformen ist die Recheneinrichtung außerdem dazu eingerichtet, ein Anfragesignal zu empfangen, welches Randbedingungen eines potenziellen Anforderungssignals umfasst; und
zu prüfen, in welchem Rahmen den Randbedingungen durch die Laststeuereinrichtung entsprochen werden kann und ein darauf basierendes Informationssignal zu erzeugen und an einen Empfänger außerhalb des lokalen Stromnetzes zu übersenden, insbesondere an einen Absender (oder: Anfrager) des Anfragesignals.

Auf diese Weise kann beispielsweise ein Virtuelles-Kraftwerk-Steuersystem als Absender, über die Recheneinrichtung, bei einer Laststeuereinrichtung eines lokalen Stromnetzes (oder vorteilhaft bei mehreren Laststeuereinrichtungen jeweils eines separaten lokalen Stromnetzes) anfragen, welche technischen Randbedingungen (und durch welche/s lokale Stromnetz/e) aktuell eingehalten werden können, und darauf basierend dann entsprechende Anforderungssignale erstellen und versenden. Dabei kann vorteilhaft eine Recheneinrichtung für mehrere Laststeuereinrichtungen zuständig sein.

Hier und im Weiteren wird jeweils davon ausgegangen, dass jedes lokale Stromnetz eine (und nur eine) Laststeuereinrichtung aufweist. Wenn demnach von mehreren Laststeuereinrichtungen die Rede ist, versteht es sich, dass damit typischerweise gemeint ist, dass jede davon zu einem separaten lokalen Stromnetz gehört. Die technische Realisierung der (Funktionen der) Laststeuereinrichtung in einem jeweiligen lokalen Stromnetz kann jedoch in verteilter Weise erfolgen, d.h., die Laststeuereinrichtung selbst muss nicht zwangsläufig in einem einzelnen Gehäuse (oder auch nur lokal) angeordnet sein.

Als Absender (oder: Anfrager) des Anfragesignals kann alternativ oder zusätzlich auch ein Netzbetreiber, ein Aggregator, oder noch eine andere Entität fungieren.

Gemäß einigen bevorzugten Ausführungsformen, Varianten oder Verfeinerungen von Ausführungsformen ist die Recheneinrichtung außerdem dazu eingerichtet, zu prüfen, in welchem Rahmen Randbedingungen eines potenziellen Anforderungssignals durch die Laststeuereinrichtung entsprochen werden kann und ein darauf basierendes Informationssignal zu erzeugen und auszusenden. Das Informationssignal kann beispielsweise Informationen über ein realisierbares Werteband von Leistungstransfers enthalten, d.h., Informationen darüber, in welchem Zeitraum welcher Leistungstransfer minimal und/oder maximal jeweils realisierbar ist.

Auf diese Weise kann ein Virtuelles-Kraftwerk-Steuersystem beispielsweise, über die Recheneinrichtung, eine Vielzahl von Informationssignalen von verschiedenen Laststeuereinrichtungen erhalten, und darauf basierend Anforderungssignale für eine, mehrere, oder alle dieser Laststeuereinrichtungen erzeugen. Diese können wiederum über die Recheneinrichtung an die entsprechenden Laststeuereinrichtungen übermittelt werden. Die Recheneinrichtung ist in dieser Variante auch als "Aggregator" bezeichenbar.

Die Recheneinrichtung kann auch ihrerseits in dem Informationssignal bereits eine aggregierte Information an das Virtuelles-Kraftwerk-Steuersystem übermitteln, welches für das Virtuelles-Kraftwerk-Steuersystem ununterscheidbar von einem Informationssignal für eine einzige Laststeuereinrichtung sein kann. Die Recheneinrichtung kann in diesem Fall dazu eingerichtet sein, ein auf dem (aggregierten) Informationssignal basierendes Anforderungssignal zu erhalten und darauf basierend Steuersignale für die einzelnen Laststeuereinrichtungen zu berechnen und auszusenden. Auf diese Weise ist eine Mehr-Ebenen-Steuerstruktur realisierbar, bei der die Laststeuereinrichtungen auf der untersten Ebene die einzelnen elektrischen Lasten und Quellen steuern, Recheneinrichtungen auf einer mittleren Eben jeweils die Randbedingungen mehrerer Laststeuereinrichtungen aggregieren, und ein Virtuelles-Kraftwerk-Steuersystem auf der obersten Ebene anhand von verhältnismäßig glatten Leistungstransferprofilen der Recheneinrichtungen die Anforderungssignale berechnen kann.

Das Erzeugen und Aussenden des Informationssignals kann insbesondere regelmäßig oder ereignisbasiert (oder: anlassbasiert) erfolgen. Wie im Vorangehenden bereits erwähnt wurde, kann es alternativ oder zusätzlich auch jeweils als Reaktion auf ein tatsächliches Anforderungssignal erzeugt und ausgesendet werden.

Gemäß einigen bevorzugten Ausführungsformen, Varianten oder Verfeinerungen von Ausführungsformen zeigt das Informationssignal ein Leistungsband als Funktion der Zeit an, innerhalb welches ein Leistungstransfer an dem Netzanschlusspunkt jeweils stattfinden kann und/oder einen Maximalenergiewert, welcher innerhalb eines Zeitraums (insbesondere innerhalb des Leistungsbands) transferiert (d.h. bezogen und/oder eingespeist) werden kann. Anhand eines solchen Leistungsbands kann ein Antwortsignal erzeugt werden, welche das mögliche Leistungsband - etwa im Sinne eines Virtuelles-Kraftwerk-Steuersystems - optimal ausnutzt.

Das Informationssignal kann einen (zeitabhängigen) Maximalenergiewert für eine maximale Energieentnahme, für eine maximale Energieeinspeisung, oder für beides umfassen, wobei für den maximalen Energiebezug und für die maximale Energieeinspeisung auch unterschiedliche Werte angegeben werden können.

Beispielsweise kann das Informationssignal angeben, dass von 7 Uhr bis 23 Uhr ein Leistungsband mit der Breite von 1 kW vorliegt, innerhalb welches eine maximale Energie von 12 kWh abgerufen werden kann.

Das Virtuelles-Kraftwerk-Steuersystem könnte somit dann beispielsweise mittels des Anforderungssignals anfordern, dass von 7 Uhr bis 19 Uhr der jeweilige Leistungstransfer in das öffentliche Stromnetz um (bis zu) 1 kW erhöht wird, oder alternativ von 7 Uhr bis 23 Uhr der jeweilige Leistungstransfer um (bis zu) 0,75 kW erhöht wird.

Wird durch das Informationssignal z.B. von 7 Uhr bis 23 Uhr ein Maximalenergiewert etwa von 10 kWh ohne ein Leistungsband angegeben, könnte das Virtuelles-Kraftwerk-Steuersystem beispielsweise anfordern, dass der Leistungstransfer von 12 Uhr bis 13 Uhr um 10 kW erhöht wird.

Gemäß einigen bevorzugten Ausführungsformen, Varianten oder Verfeinerungen von Ausführungsformen ist die Laststeuereinrichtung dazu eingerichtet, eine Leistungs-Basislinie zu erzeugen, welche eine Vorhersage des aktuell geplanten Leistungstransfers an dem Netzanschlusspunkt als Funktion der Zeit umfasst oder darstellt (d.h. ohne externe Einwirkungen). In einer solchen Leistungs-Basislinie können beispielsweise alle durch einen Benutzer des lokalen Stromnetzes programmierten (oder auch anhand von Gewohnheiten durch die Laststeuereinrichtung automatisch geschätzten oder vorhergesagten) Leistungstransfers berücksichtigt sein, wobei auch externe Parameter berücksichtigt werden können, wie etwa eine Wetterinformation (zur Schätzung der Stromerzeugung durch eine PV-Anlage des lokalen Stromnetzes) oder dergleichen. Hierzu kann die Laststeuereinrichtung beispielsweise mit dem Internet verbunden sein und von dort entsprechende externe Parameter abrufen oder empfangen.

Die Recheneinrichtung kann weiterhin dazu eingerichtet sein, die Laststeuereinrichtung basierend auf dem Anforderungssignal derart zu steuern, dass die Leistungs-Basislinie verändert wird. Nach außen, etwa für ein Virtuelles-Kraftwerk-Steuersystem, ist somit von vornherein bekannt, welche Werte der Leistungstransfer in der Zukunft genau annehmen wird. Im Gegensatz dazu wird bei im Stand der Technik bekannten Lösungen durch ein Virtuelles-Kraftwerk-Steuersystem das Entladen einer Batterie angeordnet. Die zugehörige Laststeuereinrichtung, welche aber zusätzlich den Anforderungen des Benutzers des lokalen Stromnetzes nachkommen muss, wird dementsprechend reagieren und dabei mitunter unerwünschte Effekte erzeugen, die unter Umständen den von dem Virtuelles-Kraftwerk-Steuersystem gewünschten Effekt konterkarieren. Insbesondere ist für das Virtuelles-Kraftwerk-Steuersystem aufgrund seines unvollständigen (oder fehlenden) Wissens über die Details des lokalen Stromnetzes im Stand der Technik ungewiss, wie genau sich die Anordnung des Entladens (oder Ladens) der Batterie tatsächlich auf den Leistungstransfer zwischen lokalem Stromnetz und öffentlichem Stromnetz auswirken wird.

Im Gegensatz dazu kann mithilfe der vorliegenden Erfindung die Leistungs-Basislinie verändert werden. Die veränderte Leistungs-Basislinie kann als eine prognostizierte Leistungstransferkurve bezeichnet werden. Da die Leistungs-Basislinie vorteilhaft alle der Laststeuereinrichtung bekannten Informationen über das lokale Stromnetz umfasst, ist die Wahrscheinlichkeit sehr hoch, dass die demgegenüber vorgenommene Änderung in einer entsprechenden Veränderung des tatsächlichen Leistungstransfers resultieren wird. Auf diese Weise wird die Verlässlichkeit des für eine Planung (z.B. im Sinne der Netzstabilität des öffentlichen Stromnetzes) verwendeten prognostizierten Leistungstransfers für ein Virtuelles-Kraftwerk-Steuersystem deutlich erhöht.

An dieser Stelle sei angemerkt, dass in diesem technischen Gebiet, insbesondere wenn auch private Haushalte als lokale Stromnetze berücksichtigt werden, typischerweise mit Wahrscheinlichkeiten gearbeitet wird. Eine Laststeuereinrichtung kann nicht vorhersehen, ob ein Benutzer des lokalen Stromnetzes spontan entscheidet, eine große Feier abzuhalten und deswegen beispielsweise Ofen und Geschirrspüler im Dauerbetrieb laufen. Dasselbe gilt für einen plötzlichen Großauftrag in einem industriellen Umfeld. Was jedoch an Vorhersagen machbar ist, fließt in die Leistungs-Basislinie ein, sodass diese die zuverlässigste erstellbare Prognose darstellt.

Das Verändern der Leistungs-Basislinie kann insbesondere deren - zumindest abschnittsweises, oder globales - Verschieben um eine Konstante in positiver oder negativer Richtung umfassen. Bei einer Verschiebung eines positiven Leistungstransfers um die Konstante "X Watt" in positiver Richtung würde dies beispielsweise einen - im Vergleich zum typischen Leistungstransfer - zusätzlichen Leistungstransfer von "X Watt" (bzw. einen um "X" erhöhten Leistungstransfer) in das lokale Stromnetz aus dem öffentlichen Stromnetz bedeuten. Somit kann ein Virtuelles-Kraftwerk-Steuersystem beispielsweise eine sich abzeichnende Überkapazität in der Stromerzeugung abmildern.

Das Verändern der Leistungs-Basislinie kann auch bedeuten, dass diese - zumindest abschnittsweise, oder global - auf eine Konstante gesetzt wird. Auch dies stellt einem Virtuelles-Kraftwerk-Steuersystem eine besonders einfach handhabbare prognostizierte Leistungstransferkurve zur Verfügung. Für gewöhnlich wird hierfür ein erhöhter Aufwand aufseiten der Laststeuereinrichtung anfallen.

Gemäß einigen bevorzugten Ausführungsformen, Varianten oder Verfeinerungen von Ausführungsformen ist die Laststeuereinrichtung dazu eingerichtet, die steuerbaren elektrischen Quellen nach Maßgabe einer Prioritätenliste zu steuern, welche durch einen Benutzer über eine Benutzerschnittstelle anpassbar ist. Die Prioritätenliste kann beispielsweise durch einen Benutzer über eine Benutzerschnittstelle der Laststeuereinrichtung vorgebbar und/oder veränderbar sein. So kann sichergestellt werden, dass die Wünsche des Benutzers, etwa eines Eigentümers des lokalen Stromnetzes, ausreichend oder vorrangig berücksichtigt werden. Die Prioritätenliste kann beispielsweise auch die Einstellung umfassen, dass das Erfüllen der Anforderungen in Anforderungssignalen oberste oder unterste Priorität hat. Die Prioritätenliste kann auch zeitlich variabel gestaltet sein, sodass zu bestimmten Jahres-, Wochen-, oder Tageszeiten andere Prioritäten gelten als zu anderen.

Gemäß einigen bevorzugten Ausführungsformen, Varianten oder Verfeinerungen von Ausführungsformen ist die Recheneinrichtung in die Laststeuereinrichtung integriert. Die Laststeuereinrichtung kann beispielsweise örtlich innerhalb des lokalen Stromnetzes angeordnet sein, etwa in einem Haushalt, dessen Stromnetz das lokale Stromnetz darstellt. Insbesondere kann die Laststeuereinrichtung in einem Gebäude installiert sein, dessen Stromnetz das lokale Stromnetz im Sinne der vorliegenden Erfindung darstellt.

Alternativ können die Recheneinrichtung und die Laststeuereinrichtung auch getrennt ausgebildet sein, oder sie können beide durch eine Cloud-Computing-Plattform implementiert sein.

Es kann auch vorgesehen sein, dass die Laststeuereinrichtung für mehrere separate lokale Stromnetze vorgesehen sind, d.h., dass die Laststeuereinrichtung dann auch zum Steuern der steuerbaren elektrischen Lasten und/oder steuerbaren elektrischen Quellen aller separaten lokalen Stromnetze eingerichtet sein kann. Auch in diesem Fall können die Laststeuereinrichtung und die Recheneinrichtung ineinander integriert oder voneinander separat ausgebildet sein, entweder physisch oder durch eine Cloud-Computing-Plattform.

Gemäß einigen bevorzugten Ausführungsformen, Varianten oder Verfeinerungen von Ausführungsformen weist das Steuersystem eine Mehrzahl von Laststeuereinrichtungen auf, welche je einem lokalen Stromnetz einer Mehrzahl von lokalen Stromnetzen zugehören (oder: mit je einem lokalen Stromnetz einer Mehrzahl von lokalen Stromnetzen gekoppelt sind). Jede der Laststeuereinrichtungen ist dabei zum Steuern eines Leistungsverbrauchs und/oder einer Leistungsabgabe von steuerbaren elektrischen Lasten und/oder elektrischen Quellen des jeweils zugehörigen lokalen Stromnetzes eingerichtet. Die Recheneinrichtung ist dazu eingerichtet, Steuersignale für jede der Laststeuereinrichtungen zu erzeugen. Auch bei dieser Variante fungiert die Recheneinrichtung somit als eine Art Aggregator oder Zwischenebene, welche die Leistungsverbrauche und Leistungsabgaben einer Vielzahl von lokalen Stromnetzen steuern und bündeln kann.

Die Erfindung stellt außerdem, gemäß einem zweiten Aspekt der Erfindung, ein Verfahren zum Steuern mindestens eines lokalen Stromnetzes, welches an einem Netzanschlusspunkt mit einem öffentlichen Stromversorgungsnetz verbunden ist, bereit. Das Verfahren umfasst zumindest die Schritte:
Empfangen eines Anforderungssignal von außerhalb des lokalen Stromnetzes, wobei das Anforderungssignal eine Information über einen Leistungstransfer an dem Netzanschlusspunkt in mindestens einem Zeitraum umfasst; und
Steuern von steuerbaren elektrische Lasten und/oder elektrischen Quellen des lokalen Stromnetzes durch eine Laststeuereinrichtung des lokalen Stromnetzes derart, dass in dem mindestens einen Zeitraum an dem Netzanschlusspunkt ein Leistungstransfer gemäß dem Anforderungssignal bereitgestellt wird.

Gemäß einigen bevorzugten Ausführungsformen, Varianten oder Verfeinerungen von Ausführungsformen erfolgt das Steuern der elektrischen Lasten und/oder Quellen derart, dass eine Leistungs-Basislinie der Laststeuereinrichtung, welche eine Vorhersage des aktuell geplanten Leistungstransfers an dem Netzanschlusspunkt als Funktion der Zeit umfasst oder darstellt, verändert wird, um eine veränderte Leistungs-Basislinie zu erzeugen, wobei die Leistungs-Basislinie insbesondere zumindest abschnittsweise (oder global) um eine Konstante in positiver oder negativer Richtung verschoben wird und/oder zumindest abschnittsweise (oder global) auf eine Konstante gesetzt wird.

Gemäß einigen bevorzugten Ausführungsformen, Varianten oder Verfeinerungen von Ausführungsformen umfasst das Verfahren ein Erzeugen und Aussenden des Anforderungssignals durch ein Virtuelles-Kraftwerk-Steuersystem. Das Virtuelles-Kraftwerk-Steuersystem kann das Anforderungssignal (bzw. eine Vielzahl von Anforderungssignalen an eine Vielzahl von Recheneinrichtungen) beispielsweise aufgrund von Strombedarfs- und/oder Netzstabilitätsvorgaben erzeugen.

Gemäß einigen bevorzugten Ausführungsformen, Varianten oder Verfeinerungen von Ausführungsformen beinhaltet das Verfahren außerdem:
Erzeugen und Aussenden eines Anfragesignals, welches Randbedingungen eines potenziellen Anforderungssignals umfasst, durch das Virtuelles-Kraftwerk-Steuersystem;
Prüfen, in welchem Rahmen den Randbedingungen durch eine Laststeuereinrichtung mindestens eines lokalen Stromnetzes entsprochen werden kann;
Erzeugen eines darauf basierenden Informationssignals; und Übersenden des erzeugten Informationssignals an das Virtuelles-Kraftwerk-Steuersystem;
wobei das Erzeugen und Aussenden des Anforderungssignals durch das Virtuelles-Kraftwerk-Steuersystem basierend auf dem Informationssignal durchgeführt wird.

Gemäß einigen bevorzugten Ausführungsformen, Varianten oder Verfeinerungen von Ausführungsformen umfasst das Verfahren außerdem:
Prüfen, in welchem Rahmen Randbedingungen eines potenziellen Anforderungssignals durch die Laststeuereinrichtung entsprochen werden kann; und
Erzeugen und Aussenden eines darauf basierenden Informationssignals an ein Virtuelles-Kraftwerk-Steuersystem, insbesondere regelmäßig oder ereignisbasiert.

Gemäß einem dritten Aspekt stellt die Erfindung ein Computerprogrammprodukt bereit, welches ausführbaren Programmcode umfasst, welcher dazu ausgelegt ist, wenn er von einer Rechenvorrichtung ausgeführt wird, das Verfahren gemäß einer Ausführungsform des zweiten Aspekts der vorliegenden Erfindung durchzuführen.

Gemäß einem vierten Aspekt stellt die Erfindung ein nichtflüchtiges, computerlesbares Datenspeichermedium bereit, welches ausführbaren Programmcode umfasst, welcher dazu ausgelegt ist, wenn er von einer Rechenvorrichtung ausgeführt wird, das Verfahren gemäß einer Ausführungsform des zweiten Aspekts der vorliegenden Erfindung durchzuführen.

Bei dem Datenspeichermedium kann es sich beispielsweise um eine magnetische Festplatte, eine SSD-Festplatte, einen USB-Stick oder eine Memorycard oder eine andere Art von Halbleiterspeicher oder dergleichen handeln.

Gemäß einem fünften Aspekt stellt die Erfindung einen Datenstrom bereit, welches ausführbaren Programmcode umfasst oder dazu eingerichtet ist ausführbaren Programmcode zu erzeugen, welcher dazu ausgelegt ist, wenn er von einer Rechenvorrichtung ausgeführt wird, das Verfahren gemäß einer Ausführungsform des zweiten Aspekts der vorliegenden Erfindung durchzuführen.

Eine solche Rechenvorrichtung und/oder die erfindungsgemäße Laststeuereinrichtung und/oder die erfindungsgemäß Recheneinrichtung können als eine beliebige Vorrichtung realisiert sein oder werden, welche zum Rechnen, und insbesondere zum Ausführen einer Software, einer App, oder eines Algorithmus in der Lage ist, z.B. von einem Computer. Die Rechenvorrichtung/Laststeuereinrichtung/Recheneinrichtung kann beispielsweise mindestens eine Prozessoreinheit aufweisen, z. B. eine Zentralprozessoreinheit (CPU) und/oder eine Graphikprozessoreinheit (GPU) und/oder eine Kombination davon. Die Rechenvorrichtung/Laststeuereinrichtung/Recheneinrichtung kann außerdem einen Arbeitsspeicher aufweisen, welcher mit der mindestens einen Prozessoreinheit operativ gekoppelt ist, sowie einen nicht-flüchtigen Speicher, welcher mit der mindestens einen Prozessoreinheit und dem Arbeitsspeicher operativ gekoppelt ist. Die Rechenvorrichtung/Laststeuereinrichtung/Recheneinrichtung kann ganz oder vollständig in einem lokalen Gerät und/oder ganz oder vollständig in einem entfernten System implementiert sein wie etwa in einem entfernt angeordneten Server und/oder einer Cloud-Computing-Plattform.

Insbesondere kann eine derartige Rechenvorrichtung die erfindungsgemäße Laststeuereinrichtung und/oder die erfindungsgemäße Recheneinrichtung umfassen oder implementieren, in Software und/oder Hardware.

Weitere bevorzugte Ausführungsformen, Varianten und Weiterbildungen von Ausführungsformen ergeben sich aus den abhängigen Patentansprüchen sowie aus der Beschreibung unter Bezugnahme auf die Figuren.

### Kurze Beschreibung der Figuren

Die Erfindung wird nachstehend anhand von Ausführungsbeispielen in den Figuren der Zeichnungen näher erläutert. Die teilweise schematisierte Darstellung zeigen hierbei:
- Fig. 1: ein schematisches Diagramm zur Erläuterung eines Steuersystems gemäß einer Ausführungsform der vorliegenden Erfindung;
- Fig. 2 bis Fig. 6: verschiedene Graphen zur Erläuterung der Funktion des erfindungsgemäßen Steuersystems;
- Fig. 7: ein schematisches Diagramm zur Erläuterung eines Steuersystems gemäß einer weiteren Ausführungsform der vorliegenden Erfindung;
- Fig. 8: ein schematisches Diagramm zur Erläuterung eines Verfahrens gemäß noch einer weiteren Ausführungsform der vorliegenden Erfindung;
- Fig. 9: ein schematisches Blockdiagramm eines Computerprogrammprodukts gemäß noch einer weiteren Ausführungsform der vorliegenden Erfindung; und
- Fig. 10: ein schematisches Blockdiagramm eines Datenspeichermediums gemäß noch einer weiteren Ausführungsform der vorliegenden Erfindung.

In sämtlichen Figuren sind gleiche bzw. funktionsgleiche Elemente und Vorrichtungen - sofern nichts anderes angegeben ist - mit denselben Bezugszeichen versehen worden. Die Nummerierung von Verfahrensschritten erfolgt vorrangig zu deren leichterer Unterscheidung und impliziert nicht zwangsläufig eine zeitliche Reihenfolge, obwohl eine zeitliche Reihenfolge gemäß der Reihenfolge der Nummerierung eine mögliche Variante darstellt. Verschiedene Verfahrensschritte können auch teilweise oder vollständig gleichzeitig miteinander ausgeführt werden. Auch ein mehrfaches oder iteratives Ausführen von Verfahrensschritten ist möglich.

### Detaillierte Beschreibung der Figuren

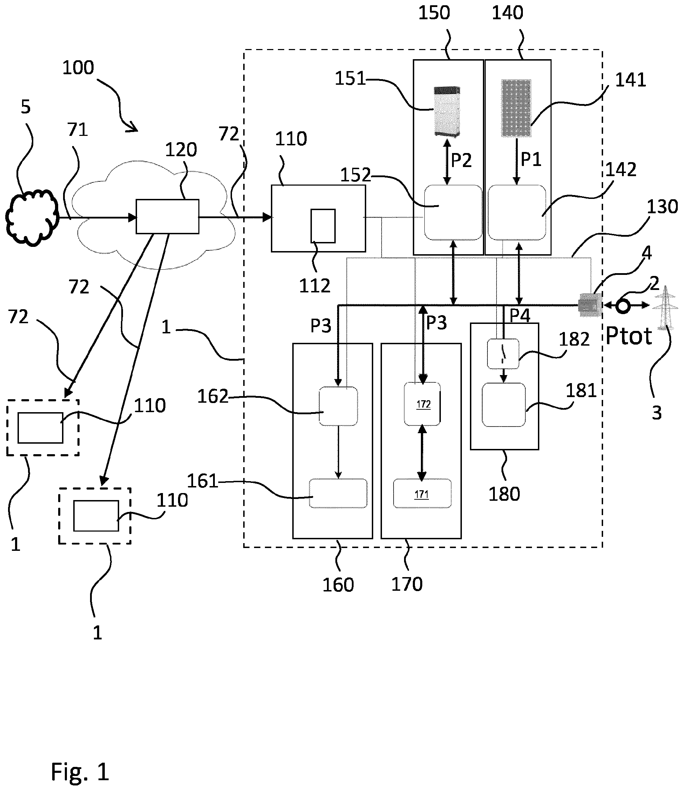

Fig. 1 zeigt ein schematisches Blockdiagramm zur Erläuterung eines Steuersystems 100 gemäß einer Ausführungsform der vorliegenden Erfindung. Das Steuersystem 100 ist zum Steuern eines lokalen Stromnetzes 1, welches an einem Netzanschlusspunkt 2 über einen Stromzähler (typischerweise einen Smart Meter 4) mit einem öffentlichen Stromversorgungsnetz 3 verbunden ist, ausgelegt. Bei dem lokalen Stromnetz 1 kann es sich beispielsweise um ein Stromnetz einer Fabrik oder eines anderen Produktionsstandorts, eines Haushalts oder einer anderen Art von Gebäude handeln.

Das Steuersystem 100 umfasst eine Laststeuereinrichtung 110, welche dazu eingerichtet ist, einen Leistungsverbrauch und/oder eine Leistungsabgabe (oder: Leistungserzeugung) von steuerbaren elektrischen Lasten und/oder steuerbaren elektrischen Quellen des lokalen Stromnetzes 1 zu steuern.

Eine Leistungsabgabe kann beispielsweise von einem lokalen Generator, etwa einer Photovoltaikanlage 140 des lokalen Stromnetzes 1 erfolgen, welche - abhängig von der aktuellen Sonneneinstrahlung auf mindestens einen Photovoltaik-Generator 141 der Photovoltaik-Anlage 140 sowie von ihrer Regelung durch mindestens einen Wechselrichter 142 der Photovoltaik-Anlage 140 - eine Leistung P1 in das lokale Stromnetz 1 einbringt bzw. beisteuert.

Eine Batterie 150 des lokalen Stromnetzes 1 kann sowohl als eine elektrische Last (nämlich beim Laden) als auch als eine elektrische Quelle (beim Entladen) fungieren. Die Batterie 150 umfasst vorteilhaft neben den eigentlichen Speicherzellen 151 auch eine Batteriesteuereinheit 152 (Quellsteuereinheit/Inverter). Dementsprechend kann ein Leistungstransfer P2, geregelt durch die Batteriesteuereinheit 152 der Batterie 150 in das lokale Stromnetz 1 sowohl positiv als auch negativ ausfallen.

Das lokale Stromnetz 1 kann weitere Lasten umfassen, hier beispielsweise eine Warmwasseranlage 160, eine Elektrisches-Fahrzeug-Anschlussanlage 170 und eine Poolsteueranlage 180. Diese werden bevorzugt mit der Leistung P1 aus der Photovoltaik-Anlage 140 versorgt, sekundär mit Leistung P2 aus der Batterie 150, tertiär mit Leistung, welche aus dem öffentlichen Stromnetz 3 bezogen wird, wobei diese Priorisierung je nach Anwendung und/oder Benutzerwünschen verändert werden kann.

Alle steuerbaren Lasten und/oder Quellen 140-180 (oder: Komponenten) des lokalen Stromnetzes 1 sind dabei vorteilhaft über einen Kommunikationsbus 130 mit der Laststeuereinrichtung 110 verbunden. Die Laststeuereinrichtung 110 kann in eine der anderen Lasten und/oder Quellen 140-180 oder in einen von deren Bestandteilen integriert sein, beispielsweise in den (oder einen) Wechselrichter 142 der Photovoltaik-Anlage 140, in die (oder eine) Batteriesteuereinheit 152 und/oder dergleichen. Auch eine verteilte Anordnung ist denkbar. Die Laststeuereinrichtung 110 kann aber auch, wie in Fig. 1 schematisch dargestellt ist, separat ausgebildet sein und etwa in einem eigenen Gehäuse angeordnet sein. Der Kommunikationsbus 130 kann drahtlos, drahtgebunden, oder durch eine Kombination realisiert sein.

Bei der Warmwasseranlage 160 und der Elektrisches-Fahrzeug-Anschlussanlage 170 handelt es sich um quantitativ steuerbare Steuereinheiten, d.h., dass ein jeweiliger Leistungsverbrauch P3 von daran angeschlossenen oder darin umfassten Lasten nicht nur entweder ein- oder ausgeschaltet werden kann, sondern in seinem Wert darüber hinaus beeinflussbar ist.

Beispielsweise kann die Warmwasseranlage 160 einen Heizstab 161 und eine zugehörige Heizstab-Laststeuereinheit 162 aufweisen. Die Heizstab-Laststeuereinheit 162 kann über den Kommunikationsbus 130 von der Laststeuereinrichtung 110 gesteuert werden, den Heizstab 161 entsprechend mit elektrischer Leistung P3 zu versorgen, beispielsweise gemäß einer von mehreren Leistungsstufen oder stufenlos.

Als ein weiteres Beispiel kann ein elektrisches Fahrzeug 171, welches an einer Wallbox 172 der Elektrisches-Fahrzeug-Anschlussanlage 170 angeschlossen ist, mit einer gezielten elektrischen (Lade-)leistung P3 geladen werden, die durch die Wallbox 172 der Elektrisches-Fahrzeug-Anschlussanlage 170 einstellbar ist, welche wiederum über den Kommunikationsbus 130 von der Laststeuereinrichtung 110 steuerbar ist. Die Wallbox 172 kann auch zur bidirektionalen elektrischen Leistungsübermittlung ausgebildet sein, sodass in eine Fahrzeugbatterie des elektrischen Fahrzeugs 171 sowohl elektrische Leistung P3 eingespeist werden kann, als auch aus dieser elektrische Leistung P3 entnommen werden kann. In diesem Fall kann die Elektrisches-Fahrzeug-Anschlussanlage 170 somit wahlweise als Quelle oder als Last fungieren, wobei durch einen Benutzer jeweils einstellbar sein kann, welche Funktionen (aktuell, oder zeitabhängig, oder regelabhängig etc.) verfügbar sein sollen.

Je nach Einstellung kann eine Batterie des elektrischen Fahrzeugs 173 auch, solange sie mit dem lokalen Stromnetz 1 verbunden ist (oder nur zu bestimmten Zeiten und/oder nach Freigabe durch einen Benutzer), ebenso wie die (stationäre) Batterie 150 behandelt werden. Dabei kann die Wallbox-Laststeuereinheit 172 die Funktion der Batteriesteuereinheit 152 erfüllen, gegebenenfalls in Kombination mit einer Batteriesteuereinheit des elektrischen Fahrzeugs 173.

Andere elektrische Lasten 180 sind hingegen rein binär (oder: qualitativ) steuerbar, d.h. nur entweder ein- oder ausschaltbar - typischerweise eine Poolpumpe 181, deren Leistungszufuhr über einen binären Schalter 182 einstellbar ist. Beispielsweise können dies aber auch konventionelle Wärmepumpen, Fernseher, Waschmaschinen, Glühlampen und dergleichen sein. Elektrische Leistung P4 zu jeder einzelnen dieser elektrischen Lasten 180 ist somit typischer Weise entweder null oder nimmt einen fixen Wert an.

Die Lasten bzw. Quellen 140-180 sind hier jeweils mit beispielhaften Bestandteilen dargestellt. Es versteht sich, dass einige oder alle davon jeweils ineinander integriert sein können, insbesondere innerhalb einer Last bzw. Quelle. In diesem Fall dient die graphische Aufspaltung, etwa in eine Wallbox 171 und eine davon separat dargestellte Wallbox-Laststeuereinheit 172, lediglich der besseren funktionalen Darstellung. In der Realität kann die Wallbox-Laststeuereinheit 172 etwa in die Wallbox 171 integriert sein.

Die Laststeuereinrichtung 110 hat Zugang zu einer Datenbank (entweder einer internen Datenbank oder einer entfernt angeordneten Datenbank wie etwa einer Cloud-Datenbank), in welcher die in dem lokalen Stromnetz 1 durch die Laststeuereinrichtung 110 steuerbaren elektrischen Lasten und/oder Quellen 140-180 sowie deren jeweilige Steuerfähigkeit (qualitativ oder quantitativ) hinterlegt sind.

In der Datenbank kann außerdem eine Prioritätenliste hinterlegt sein, welche Regeln enthält, gemäß welchen die Laststeuereinrichtung 110 die elektrischen Lasten und/oder Quellen 140-180 ansteuert. Die Prioritätenliste kann zum Beispiel Schwellwerte enthalten, etwa dass die Warmwassertemperatur in der Heizung nicht unter X°C fallen, aber auch nicht Y°C übersteigen darf, dass zunächst eine Batterie 150 geladen werden soll, ehe ein Leistungstransfer Ptot aus dem lokalen Stromnetz 1 heraus in das öffentliche Stromnetz 3 erfolgen soll, dass um 17:00 ein an die Wallbox 171 angeschlossenes elektrisches Fahrzeug 173 vollständig geladen sein soll, und/oder dergleichen mehr.

Das Steuersystem 100 (insbesondere die Laststeuereinrichtung 110) kann eine Benutzerschnittstelle 112 aufweisen, mittels welcher ein Benutzer die Prioritätenliste anpassen kann, sei es um regelmäßige Ereignisse/Steuersignale, sei es um einmalige Ereignisse/Steuersignale einzustellen. Die Laststeuereinrichtung 110 und die elektrischen Lasten und/oder Quellen 140-180 können somit Teil eines "Smart Home"-Konzepts sein. Die Benutzerschnittstelle 112 kann eine graphische Benutzerschnittstelle aufweisen (engl. "graphical user interface", GUI), etwa direkt an der Laststeuereinrichtung 110. Alternativ oder zusätzlich kann die Laststeuereinrichtung 110 auch mit einer App koppelbar sein, welche auf einem Mobiltelefon, Tablet, oder einer sonstigen Rechenvorrichtung ausführbar ist, und welche eine insbesondere graphische Benutzerschnittstelle aufweist. Selbstverständlich ist auch eine sprachgesteuerte Benutzerschnittstelle denkbar.

Das Steuersystem 100 umfasst außerdem eine Recheneinrichtung 120, welche dazu eingerichtet ist, ein Anforderungssignal 71 von außerhalb des lokalen Stromnetzes 1 zu empfangen, insbesondere von einem Virtuelles-Kraftwerk-Steuersystem 5. Das Anforderungssignal 71 umfasst eine Information über einen elektrischen Leistungstransfer Ptot in mindestens einem Zeitraum (insbesondere zu mindestens einem Zeitpunkt), beispielsweise an dem Netzanschlusspunkt 2 des lokalen Stromnetzes 1. Beispielsweise kann das Anforderungssignal 71 einen spezifischen Wert für einen Ziel-Leistungstransfer umfassen, obere und/oder untere Schwellen dafür angeben, abschnittsweise oder globale Anpassungen gegenüber einer Leistungs-Basislinie fordern und/oder dergleichen mehr. Die Recheneinrichtung 120 kann das Anforderungssignal 71 kabelgebunden oder kabellos erhalten. Wie dargestellt, kann die Recheneinheit 120 in einer Cloud angeordnet sein, dabei jedoch als Teil des Steuersystems 100 verstanden werden.

In einigen Varianten kann die Recheneinrichtung 120 in die Laststeuereinrichtung 110 integriert sein, insbesondere in demselben Gehäuse und/oder unter Verwendung derselben Hardware ausgebildet sein. Somit kann beispielsweise der Wechselrichter 142 sowohl die Laststeuereinrichtung 110 als auch die Recheneinrichtung 120 beinhalten.

Die Recheneinrichtung 120 ist weiterhin dazu eingerichtet, Steuersignale 72 zu erzeugen, welche dazu ausgebildet sind, die Laststeuereinrichtung 110 anzuweisen, die steuerbaren elektrische Lasten und/oder elektrischen Quellen 140-180 des lokalen Stromnetzes 1 derart zu steuern, dass in dem mindestens einen Zeitraum (oder zu dem mindestens einen Zeitpunkt) an dem Netzanschlusspunkt 2 ein Leistungstransfer Ptot gemäß dem Anforderungssignal 71 bereitgestellt wird.

Wie in Fig. 1 außerdem dargestellt ist, kann ein und dieselbe Recheneinrichtung 120 auch an mehrere separate lokale Stromnetze 1 angeschlossen sein und zur Erzeugung von Steuersignalen 72 für eine jeweilige Laststeuereinrichtung 110 des jeweiligen lokalen Stromnetzes 1 ausgebildet sein. Bei der Steuerung der einzelnen Laststeuereinrichtungen 110 kann die Recheneinrichtung 120 jeweils die anderen Laststeuereinrichtungen 110 berücksichtigen, alternativ (oder optional) aber auch eine, mehrere, oder jede Laststeuereinrichtung 110 unabhängig von den anderen steuern.

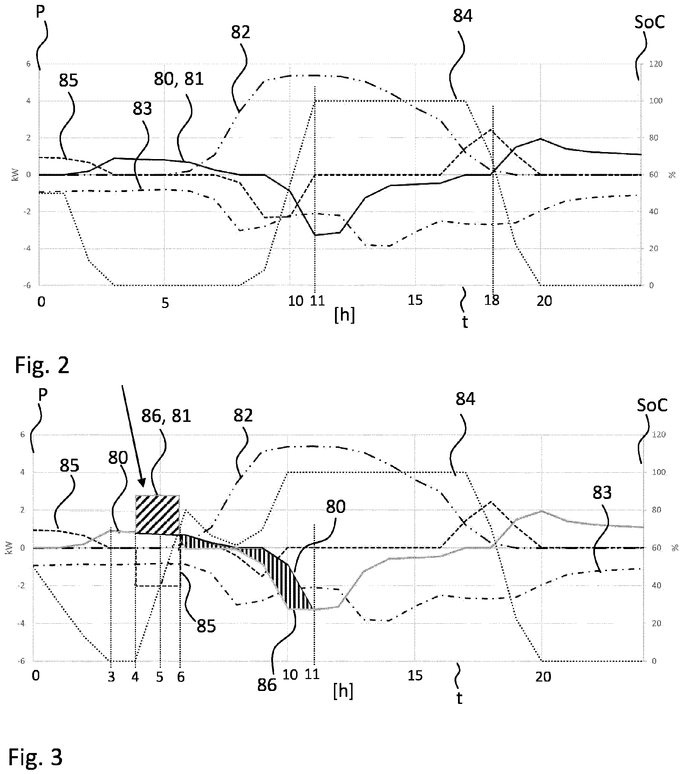

Im Folgenden werden mögliche Funktionen des Steuersystems 100 auch anhand der nachfolgenden Fig. 2 bis Fig. 6 erläutert werden, welche verschiedene Graphen zur Illustration von Leistungstransfers von elektrischen Lasten und/oder Quellen 140, 160-180 und Ladezuständen von Batterien 150 zeigen. Eingezeichnete Pfeile markieren dabei jeweils den Zeitraum, für den das Anforderungssignal 71 Informationen erhält, und in welchem dementsprechend durch das Steuersystem 100 Anpassungen vorgenommen werden, beispielsweise damit der tatsächliche Leistungstransfer oder zumindest der aktuell prognostizierte Leistungstransfer einem Ziel-Leistungstransfer gemäß dem Anforderungssignal 71 entspricht.

Vorteilhaft ist die Laststeuereinrichtung 110 dazu eingerichtet, eine Leistungs-Basislinie zu erzeugen, welche eine Vorhersage des aktuell geplanten Leistungstransfers Ptot an dem Netzanschlusspunkt 2 als Funktion der Zeit umfasst, und die Recheneinrichtung dazu eingerichtet, die Laststeuereinrichtung 110 basierend auf dem Anforderungssignal 71 derart zu steuern, dass die Leistungs-Basislinie verändert wird.

Fig. 2 stellt eine beispielhafte Leistungs-Basislinie 80 sowie verschiedene Graphen zur Erläuterung von deren Zusammensetzung dar, hier noch in einem Fall ohne ein externe Anforderungssignal 71 und dementsprechend auch ohne ein darauf basierendes Steuersignal 72.

Auf der horizontalen Achse von Fig. 2 ist die Zeit t aufgetragen, hier 24 Stunden eines Tages, beginnend bei 0:00 Uhr und endend bei 24:00 Uhr. Mit Sonnenaufgang beginnt eine Photovoltaikanlage 140 Strom zu erzeugen (Leistungsabgabe 82 für den Leistungstransfer P1 der Photovoltaikanlage wird positiv, bringt also Leistung in das lokale Stromnetz 1 ein), was nach Einbruch der Dunkelheit, gegen 19:30 Uhr, wieder endet. Dem steht ein kombinierter Leistungsverbrauch 83 gegenüber, der also Leistung aus dem lokalen Stromnetz 1 entnimmt. Die Höhe der Leistungstransfers 82, 83 sind in diesem Beispiel an der linken vertikalen Achse P der Fig. 2 ablesbar, welche Leistungen in kW angibt.

Fig. 2 zeigt außerdem einen jeweiligen aktuellen Ladezustand 84 einer Batterie 150 des lokalen Stromnetzes 1, dessen prozentuale Werte an der rechten vertikalen Achse SoC der Fig. 2 ablesbar sind.

Gut erkennbar ist anhand des Ladezustands 84 etwa, wie um 1:00 Uhr zunächst die zu etwa 50% geladene Batterie 150 entladen wird, um den kombinierten Leistungsverbrauch 83 in dem lokalen Stromnetz 1 zu decken. Dies ist auch an der ebenfalls dargestellten Leistung 85 der Batterie 150 ersichtlich. Sobald die (Entlade-)Leistung 85 der Batterie 150, ca. gegen 2:00 Uhr, nicht mehr ausreicht, den kombinierten Leistungsverbrauch 83 zu decken, wird, da noch keine Leistung der Photovoltaikanlage 140 vorliegt, damit begonnen, Leistung aus dem öffentlichen Stromnetz 3 zu beziehen. Dementsprechend steigt der (prognostizierte) Leistungstransfer 81 in das lokale Stromnetz 1 an dem Netzanschlusspunkt 2 an, um das Defizit auszugleichen.

Mit Beginn des Anstiegs der Leistungsabgabe 82 der Photovoltaikanlage 140 kann dieser Bezug aus dem öffentlichen Stromnetz 3 wieder verringert werden. Bei weiter zunehmender Leistungsabgabe 82 der Photovoltaikanlage 140 fällt zunächst der Leistungstransfer 81 an dem Netzanschlusspunkt 2 auf null ab, und dann beginnt mit dem Leistungsüberschuss das Laden der Batterie 150, und zusätzlich noch ein Einspeisen aus dem lokalen Stromnetz 1 in das öffentliche Stromnetz 3. Sofern die Gegebenheiten und/oder Gewohnheiten in dem lokalen Stromnetz 1 im Wesentlichen gleich bleiben, wird in diesem Beispiel der (prognostizierte) Leistungstransfer 81 über den Tag verteilt stets in etwa die in Fig. 2 gezeigte Form annehmen, wobei sich über die Wochen und Monate hinweg Veränderungen aufgrund unterschiedlicher Sonnenzeiten, Heizungsgewohnheiten etc. ergeben können (hier o.B.d.A. nicht berücksichtigt). Die in Fig. 2 gezeigte Kurve für den (prognostizierten) Leistungstransfer 81 kann somit als eine Leistungs-Basislinie 80 verwendet werden.

Fig. 3 zeigt nun die Situation, dass in dem Anforderungssignal 71 gefordert wird, die Leistungs-Basislinie 80 aus Fig. 2 zu verändern, um so eine veränderte Leistungs-Basislinie 86 zu erzeugen, und die Recheneinrichtung 120 ein entsprechendes Steuersignal 72 an die Laststeuereinrichtung 110 sendet. Wo die ursprüngliche Leistungs-Basislinie 80 und die veränderte Leistungs-Basislinie 86 gleich verlaufen, ist jeweils nur die veränderte Leistungs-Basislinie 86 dargestellt. Die veränderte Leistungs-Basislinie 86 ist aber auch identisch mit der Linie für den nun prognostizierten Leistungstransfer 81.

Konkret ist in Fig. 3 die Situation gezeigt, dass der Leistungstransfer 81 in das lokale Stromnetz 1 in dem Zeitraum etwa zwischen 4:00 Uhr und 6:00 Uhr (siehe den Pfeil) erhöht werden soll, hier um eine Konstante +2kW von etwa 1 kW auf etwa 3kW. Die Leistungs-Basislinie 80 wird also nicht auf einen festen Wert gesetzt, sondern dynamisch angepasst (hier: erhöht). Gut ersichtlich ist etwa, wie deshalb die Laststeuereinrichtung 110 die Batterie 150 steuert, sich früher wieder zu laden, um zusätzliche Leistung aufzunehmen. Dementsprechend wird die Ladeleistung 85 der Batterie 150 früher negativ, was einer Entnahme von elektrischer Leistung aus dem restlichen lokalen Stromnetz 1 zur Ladung der Batterie 150 entspricht. Der Ladezustand 84 der Batterie 150 steigt demnach früher an (ab ca. 4 Uhr in Fig. 3, gegenüber ca. 8 Uhr in Fig. 2).

Es zeigt sich auch, dass deswegen im weiteren zeitlichen Verlauf, aufgrund des nun im Vergleich schon früher angestiegenen Ladezustands 84 der Batterie 150, die Batterie 150 mit Beginn der Photovoltaik-Produktion schneller zu 100% geladen ist (bereits gegen 10:00 Uhr statt erst um 11:00 Uhr) und daher der Leistungstransfer gemäß der veränderten Leistungs-Basislinie 86 früher negativ wird (d.h., früher Leistung aus dem lokalen Stromnetz 1 in das öffentlichen Stromnetz 3 abgegeben wird) als bei der Leistungs-Basislinie 80.

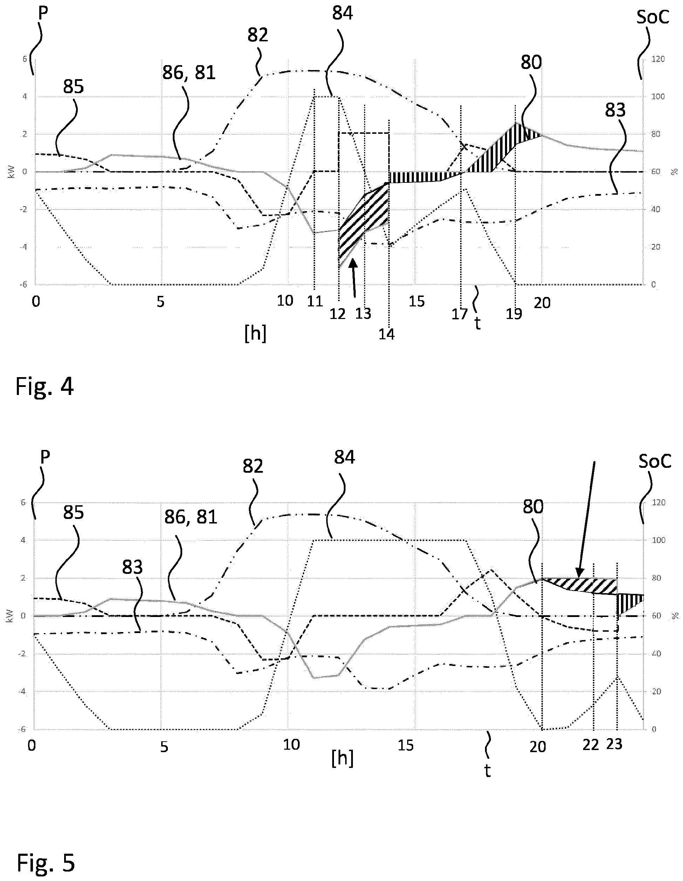

Fig. 4 zeigt demgegenüber die Situation, dass in dem Anforderungssignal 71 gefordert wird, die Leistungs-Basislinie 80 aus Fig. 2 derart zu verändern, dass der (prognostizierte) Leistungstransfer 81 in das lokalen Stromnetz 1 abschnittsweise verringert wird, hier um -2kW in dem Zeitraum etwa zwischen 12:00 Uhr und 14:00 Uhr (siehe den Pfeil auf die schräg schraffierte Fläche, welche den Unterschied markiert) verschoben wird. Dementsprechend steuert die Laststeuereinrichtung 110 (basierend auf dem Steuersignal 72) etwa die Batterie 150, sich ab ca. 12:00 Uhr zu entladen.

In der Folge ergibt es sich, dass somit im Vergleich zu der ursprünglichen Leistungs-Basislinie 80 die veränderte Leistungs-Basislinie 86 früher auf null ansteigt (bereits um 14:00 Uhr statt erst um 17:00 Uhr) und somit auch bereits früher (nämlich um 17:00 Uhr statt um 18:00 Uhr) beginnt, ins Positive zu steigen, mit einem früheren und höheren Peak von ca. 2,6 kW um 19:00 Uhr (statt 2 kW um 20:00 Uhr). Die veränderte Leistungs-Basislinie 86 verläuft somit von 14:00 Uhr bis 20:00 Uhr durchgehend höher als die ursprüngliche Leistungs-Basislinie 80. Der Unterschied ist mit einer senkrechten Schraffur markiert.

Fig. 5 zeigt die Situation, dass der Leistungstransfer 81 in das lokale Stromnetz 1 in dem Zeitraum etwa zwischen 20:00 Uhr und 23:00 Uhr (siehe den Pfeil auf die schräg schraffierte Fläche, welche den Unterschied markiert) auf einen konstanten Wert von 2kW gesetzt werden soll, unabhängig davon, ob dies - wie dargestellt - eine Erhöhung, oder eine Verringerung des (prognostizierten) Leistungstransfers 81 im Vergleich zu der Leistungs-Basislinie 80 bedeutet.

In dem dargestellten Beispiel führt die Erhöhung der Stromeinspeisung in das lokale Stromnetz 1 dazu, dass - aufgrund des ansonsten gleichbleibenden Leistungsverbrauchs 83 der Ladezustand 84 der Batterie 150 ab 20:00 Uhr wieder erhöht wird. Zum Vergleich: in Fig. 2 blieb der Ladezustand ab 20:00 Uhr konstant auf null.

Nach Ende des Zeitraums mit der Veränderung (zwischen 20:00 Uhr und 23:00 Uhr), also sobald in dem gezeigten Beispiel keine Anforderung aus einem Anforderungssignal 71 mehr vorliegt, kann der weiterhin unverändert bestehende Leistungsverbrauch 83 nun teilweise durch die Batterie 150 gedeckt werden, sodass ab ca. 23:00 Uhr der Ladezustand 84 der Batterie 150 wieder sinkt, und die Stromeinspeisung in das lokale Stromnetz 1 gemäß der veränderten Basis-Leistungslinie 86 ab da wieder unterhalb der ursprünglichen Basis-Leistungslinie 80 bleibt (senkrecht schraffierter Bereich).

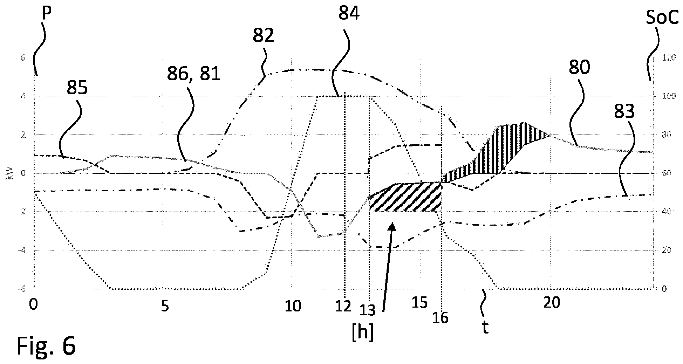

Fig. 6 zeigt wiederum die Situation, dass der (prognostizierte) Leistungstransfer 81 aus dem lokalen Stromnetz 1 in das öffentliche Stromnetz 3 in dem Zeitraum etwa zwischen 13:00 Uhr und 16:00 Uhr (siehe den Pfeil auf die schräg schraffierte Fläche, die wieder den Unterschied zur ursprünglichen Basis-Leistungslinie 80 markiert) auf einen konstanten Wert von -2kW gesetzt werden soll, unabhängig davon, ob dies - wie dargestellt - eine Verringerung, oder eine Erhöhung des (prognostizierten) Leistungstransfers 81 im Vergleich zu der Leistungs-Basislinie 80 bedeutet.

In Fig. 6 ist ersichtlich, dass zunächst, um der geänderten Basis-Leistungslinie 86 trotz unverändertem Leistungsverbrauch 83 entsprechen zu können, die Ladeleistung 85 der Batterie 150 positiv gesetzt wird und somit der Ladezustand 84 der Batterie 150 sinkt. In der Folge wird die veränderte Basis-Leistungslinie 86 im Vergleich zu der ursprünglichen Basis-Leistungslinie 80 schneller positiv, nämlich bereits gegen 16:00 Uhr statt erst gegen 18:00 Uhr wie in Fig. 2. Dadurch liegt die Basis-Leistungslinie 86 von ca. 16:00 Uhr bis ca. 20:00 Uhr über der ursprünglichen Basis-Leistungslinie 80, siehe die senkrecht schraffierte Fläche in Fig. 6. Auch das Maximum der geänderten Basis-Leistungslinie 86 liegt nun höher und früher, nämlich bei ca. 2,6 kW um 19:00 Uhr, statt bei 2 kW um 20:00 Uhr.

Anhand von Fig. 2 bis Fig. 6 wurden Beispiele beschrieben, die sich auf eine unterschiedliche Steuerung der Batterie 150 beziehen; es versteht sich jedoch, dass auch andere steuerbare elektrische Lasten und/oder Quellen durch die Laststeuereinrichtung 110 gesteuert werden können. Um Leistungsüberschüsse aufzunehmen, kann beispielsweise eine Warmwassertemperatur erhöht werden. Ebenso kann, wenn aktuell eher zu wenig Leistung verfügbar ist, eine weitere Erwärmung der Warmwassertemperatur unterbunden oder verschoben werden (immer vorausgesetzt, dass die Warmwassertemperatur dabei in erlaubten Parameterbereichen bleibt, die durch die Prioritätsliste vorgegeben sein können).

Es zeigt sich jedoch deutlich, dass im Vergleich zu Lösungen aus dem Stand der Technik, die eine direkte Steuerung der Batterie 150 von außen vorsehen, das vorliegenden Steuersystem 100 eine effizientere, besser vorhersagbare und das öffentlichen Stromnetz 3 weniger belastende Lösung bereitstellt, da die Laststeuereinrichtung 110 in natürlicher Weise in Kenntnis aller relevanten Parameter (insbesondere der Lasten und/oder Quellen 140-180 inklusive der Photovoltaikanlage 140) die bestmögliche Erfüllung der Anforderungen z.B. eines Virtuelles-Kraftwerk-Steuersystem 5 ermöglicht.

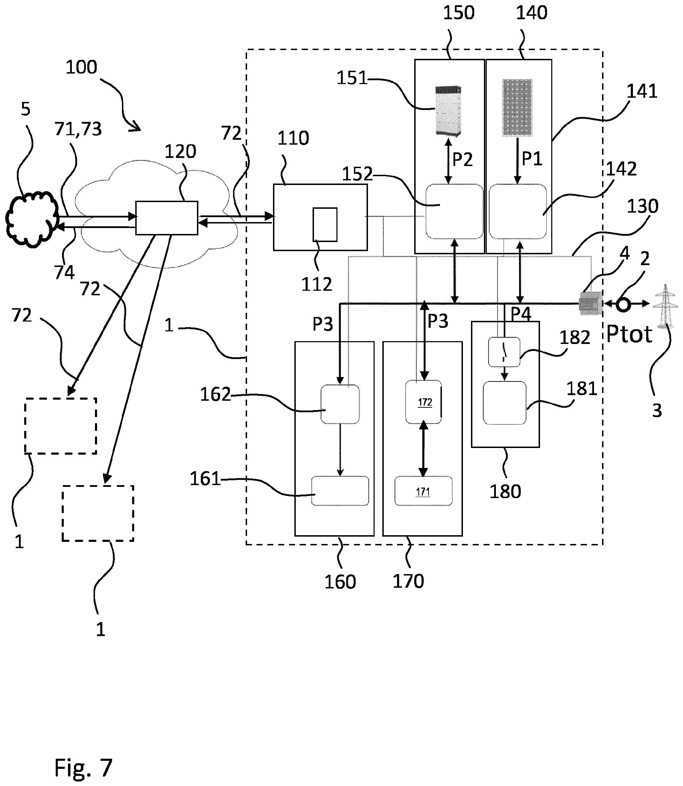

Fig. 7 zeigt eine Variante des Steuersystems 100 gemäß einer weiteren Ausführungsform der vorliegenden Erfindung, bei der die Recheneinrichtung 120 dazu eingerichtet ist, ein Informationssignal 74 auszusenden, insbesondere an ein Virtuelles-Kraftwerk-Steuersystem 5. Das Informationssignal 74 umfasst Informationen, in welchem Rahmen Randbedingungen eines potenziellen oder tatsächlichen Anforderungssignals 71 durch die Laststeuereinrichtung 110 entsprochen werden kann oder könnte.

Das Virtuelles-Kraftwerk-Steuersystem 5 kann basierend auf einem oder mehreren solcher Informationssignale 74 ein oder mehrere Anforderungssignale 71 erzeugen und an eine oder mehrere Recheneinrichtungen 120 aussenden. Wie mit Bezug auf Fig. 1 bereits erläutert wurde, kann jede Recheneinrichtung 120 mit einer, oder auch mit mehreren Laststeuereinrichtungen 110 zur Kommunikation (und ggfs. Steuerung) gekoppelt sein.

In manchen Varianten sendet das Virtuelles-Kraftwerk-Steuersystem 5 zunächst ein Anfragesignal 73 ab, welches die Randbedingungen eines potenziellen Anforderungssignals 71 umfasst. Beispielsweise kann das Anfragesignal 73 enthalten, in welchem Rahmen (z.B. wie lange oder in welcher Höhe) zu einem erhöhten (oder verringerten) Leistungstransfer in einem bestimmten Zeitraum beigetragen werden kann. Typischerweise sind nämlich die Größenordnungen in einem Virtuelles-Kraftwerk-Steuersystem 5 so hoch, dass eine Vielzahl von lokalen Stromnetzen 1 benötigt wird, um Bedürfnisse des Virtuelles-Kraftwerk-Steuersystems 5 zu erfüllen. Die Recheneinrichtung 120 ist in diesem Fall dazu eingerichtet, das Anfragesignal 73 zu empfangen und ein entsprechendes Informationssignal 74 als Reaktion basierend darauf zu erzeugen.

Alternativ oder zusätzlich kann die Recheneinrichtung 120 auch dazu eingerichtet sein, das Informationssignal 74 regelmäßig zu erzeugen und auszusenden, etwa an ein Virtuelles-Kraftwerk-Steuersystem 5.

Zum Erzeugen des Informationssignals 74 ist die Recheneinrichtung 120 vorteilhaft in ständigem oder regelmäßigem Kontakt mit mindestens einer Laststeuereinrichtung 110 eines lokalen Stromnetzes 1, insbesondere mit mehreren Laststeuereinrichtungen 110 (nicht dargestellt) mehrerer lokaler Stromnetze 1 (siehe Fig. 7). Alternativ oder zusätzlich kann auch vorgesehen sein, dass die Laststeuereinrichtungen 110 jeweils Updates an die Recheneinrichtung 120 senden, falls sich eine Veränderung ergibt, z.B. die Leistungs-Basislinie 80 oder die Prioritätenliste verändert wird.

Ist mindestens eine Laststeuereinrichtung 110 in die Recheneinrichtung 120 integriert, können zumindest die entsprechenden Updates dieser mindestens einen Laststeuereinrichtung 110 der Recheneinrichtung 120 bereits unmittelbar vorliegen.

Es kann auch eine separate Vorhersageeinrichtung vorgesehen sein, welche Vorhersagen für die Leistungs-Basislinie 80 trifft, und diese an die Laststeuereinrichtung 110 und/oder die Recheneinrichtung 120 übermittelt. Die Vorhersageeinrichtung kann beispielsweise externe Daten (also Daten von außerhalb des mindestens einen lokalen Stromnetzes 1) für die Vorhersage heranziehen, etwa Wetterdaten (z.B. "sonnig/bewölkt" am Standpunkt mindestens einer Photovoltaik-Anlage 140 mindestens eines lokalen Stromnetzes 1). Die Vorhersageeinrichtung kann durch eine Cloud-Computing-Plattform implementiert sein und/oder lokal ausgebildet sein.

In einer Ausführungsform kann die Recheneinrichtung 120 auch zu erwartende Veränderungen an der Leistungs-Basislinie 80 unabhängig von Updates (oder: Informationen) der Laststeuereinrichtung(en) 110 erhalten oder berechnen, beispielsweise aufgrund von Wetterdaten und/oder von Vorhersagen einer Vorhersageeinrichtung.

Ist die Recheneinrichtung 120 mit mehreren Laststeuereinrichtungen 110 im Kontakt, kann sie als ein technischer Aggregator fungieren, welcher die Fähigkeiten der einzelnen lokalen Stromnetze 1, ihren jeweiligen Leistungstransfer Ptot zu beeinflussen, aggregiert und die Gesamtheit dieser Fähigkeiten in dem Informationssignal 74 mitteilt. Erhält sie dann ein entsprechendes Anforderungssignal 71, kann sie an die verschiedenen Laststeuereinrichtungen 110 der verschiedenen lokalen Stromnetze 1 die entsprechenden Steuersignale 72 aussenden, um das in dem Anforderungssignal 71 Geforderte zu realisieren, beispielsweise eine geforderte Leistung zu übertragen.

Die Vorgehensweise, dass zunächst ein Anfragesignal 73 und ein Informationssignal 74 ausgetauscht werden, ehe das Anforderungssignal 72 empfangen wird, ist zwar besonders vorteilhaft, wenn die Recheneinrichtung 120 mit mehreren Laststeuereinrichtungen 110 mehrere lokaler Stromnetze 1 verbunden ist, ist jedoch auch bei der Ausführungsform gemäß Fig. 1 denkbar, wo die Recheneinrichtung 120 nur mit einer Laststeuereinrichtung 110 verbunden ist (und möglicherweise sogar in diese integriert ist).

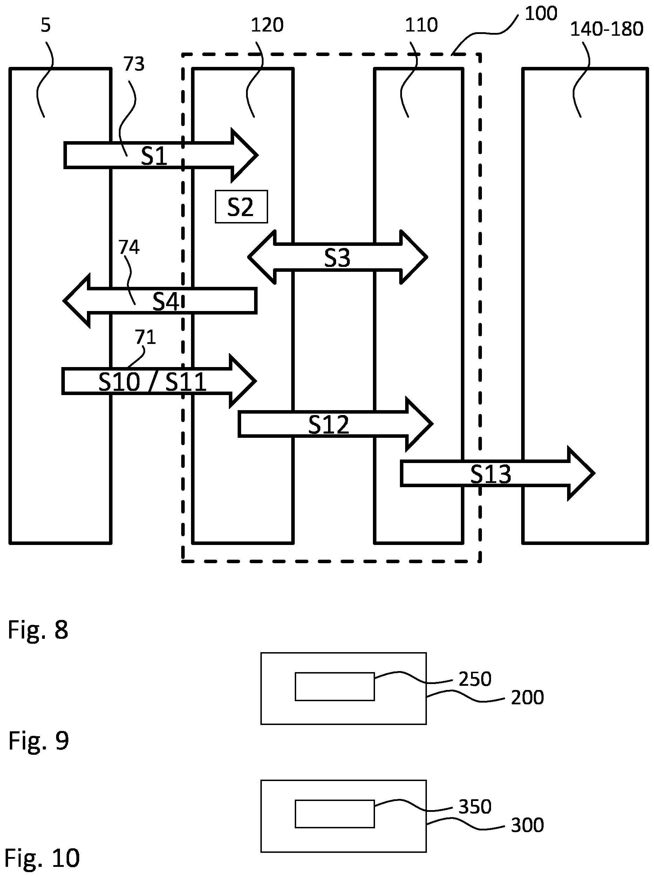

Fig. 8 zeigt ein schematisches Diagramm zum Erläutern eines Verfahrens gemäß einer Ausführungsform nach dem zweiten Aspekt der vorliegenden Erfindung. Das Verfahren ist mit den in Fig. 1 oder Fig. 7 dargestellten Steuersystemen 100 durchführbar, aber auch unabhängig davon. Dementsprechend kann das Verfahren gemäß allen in Bezug auf das erfindungsgemäße Steuersystem beschriebenen Varianten, Optionen, und Verfeinerungen angepasst werden und umgekehrt.

Die vertikalen Balken in Fig. 8 zeigen die diversen Akteure des Verfahrens, wobei teilweise auch andere Verteilungen möglich sind und insbesondere die Recheneinrichtung 120, wie bereits erwähnt, auch in die Laststeuereinrichtung 110 integriert sein kann (in Fig. 8 durch einen gestrichelten Rahmen angedeutet). Horizontale Pfeile zeigen Signalübermittlungen über den Kommunikationsbus 130 an.

Ein grundlegender Teil des Verfahrens besteht darin, dass in einem Schritt S11 ein Anforderungssignal 71 von außerhalb eines lokalen Stromnetzes 1 empfangen wird (insbesondere durch eine mit dem lokalen Stromnetz 1 gekoppelte Recheneinrichtung 120), wobei das Anforderungssignal 71 eine Information über einen Leistungstransfer in mindestens einem Zeitraum umfasst, beispielsweise eine Information über einen in mindestens einem Zeitraum geforderten elektrischen Ziel-Leistungstransfer 81 an dem Netzanschlusspunkt 2. Das Verfahren kann dementsprechend auch ein Erzeugen und Aussenden S10 des Anforderungssignals 71, insbesondere durch ein Virtuelles-Kraftwerk-Steuersystem 5, umfassen.

In einem Schritt S13 werden steuerbare elektrische Lasten und/oder elektrischen Quellen 140-180 des lokalen Stromnetzes 1 durch eine (insbesondere lokale) Laststeuereinrichtung 110 des lokalen Stromnetzes 1 derart gesteuert, dass in dem mindestens einen Zeitraum an dem Netzanschlusspunkt 2 ein Leistungstransfer 81 gemäß dem Anforderungssignal 71 bereitgestellt wird. Im Vorangehenden wurden bereits einige detaillierte Beispiele beschrieben.

Hierzu können in einem Schritt S12 Steuersignale 72 durch die Recheneinrichtung 120 erzeugt werden, die die Laststeuereinrichtung 110 anweisen, die steuerbaren elektrischen Lasten und/oder Quellen 140-180 entsprechend zu steuern S13.

In der jeweiligen elektrischen Last und/oder Quelle 140-180 können, je nach Ausführung, interne Steuersignale ausgesendet werden, etwa zwischen Wechselrichter 142 und Photovoltaik-Generator 141, zwischen Batteriesteuereinheit 152 und den Speicherzellen 151, zwischen Heizstab-Laststeuereinheit 162 und Heizstab 161, zwischen Wallbox-Laststeuereinheit 172 und Wallbox 171 (und/oder dem elektrischen Fahrzeug 173), und so weiter.

Diesen Schritten S10-S13 können, wie bereits zuvor erläutert wurde, verschiedene andere optionale Schritte vorausgehen oder nachfolgen.

Beispielsweise kann in einem Schritt S1 ein Anfragesignal 73 erzeugt und, insbesondere von einem Virtuelles-Kraftwerk-Steuersystem 5 an eine Recheneinrichtung 120, ausgesendet werden, wobei das Anfragesignal 73 Randbedingungen eines potenziellen Anforderungssignal 71 des Virtuelles-Kraftwerk-Steuersystems 5 an ein lokales Stromnetz 1 umfasst, welches mit der Recheneinrichtung 120 gekoppelt ist.

In einem Schritt S2 kann, insbesondere durch die Recheneinrichtung 120, geprüft werden, in welchem Rahmen den Randbedingungen eines potenziellen Anforderungssignals 71 durch die Laststeuereinrichtung 110 entsprochen werden kann. Hierzu können in einem optionalen Schritt S3 Informationen zwischen der Recheneinrichtung 120 und einer oder mehreren Laststeuereinrichtungen 110 ausgetauscht werden. Somit kann die Recheneinrichtung 120 nicht nur feststellen, ob eine bestimmte Laststeuereinrichtung 110 (bzw. das mit ihr gekoppelte lokale Stromnetz 1) bestimmte Anforderungen erfüllen kann, sondern auch, welche von mehreren Laststeuereinrichtungen 110 (bzw. welche der mit diesen jeweils gekoppelten lokalen Stromnetze 1) bestimmte Anforderungen erfüllen können oder wollen, insbesondere auch zu welchem Grad und/oder zu welchen Bedingungen (z.B. eine bestimmte Vergütung oder dergleichen).

In einem Schritt S4 kann ein darauf basierendes Informationssignal 74 ausgesendet werden, etwa durch die Recheneinrichtung 120 an das Virtuelles-Kraftwerk-Steuersystem 5. Das Erzeugen S10 des Anforderungssignal 71 kann dann insbesondere durch das Virtuelles-Kraftwerk-Steuersystem 5 basierend auf dem dort empfangenen Informationssignal 74 erfolgen. Das heißt, das Anforderungssignal 71 kann dort derart erzeugt werden, dass seine Anforderungen durch die Laststeuereinrichtung 110, für welche das Anforderungssignal 71 bestimmt ist (oder eine bestimmte von mehreren Laststeuereinrichtungen 110) auch erfüllbar sind.

Wie im Vorangehenden bereits erläutert wurde, kann das Erzeugen und Aussenden des Informationssignals 74 auch unabhängig von einem Anfragesignal 73 erfolgen, also beispielsweise regelmäßig oder anlassbasiert. Eine Recheneinrichtung 120 kann hierzu regelmäßig oder anlassbasiert in dem Schritt S3 Informationen mit mehreren Laststeuereinrichtungen 110 austauschen.

Es versteht sich, dass ein Benutzer des lokalen Stromnetzes 1 auf verschiedene Weisen auf das Verfahren Einfluss nehmen kann, etwa durch Programmieren oder Verändern einer Prioritätenliste der Laststeuereinrichtung 110 mithilfe einer Benutzerschnittstelle, durch manuelles Ein- oder Ausschalten einer der steuerbaren elektrischen Lasten und/oder Quellen 140-180, oder auch von nicht-steuerbaren elektrischen Lasten und/oder Quellen, oder durch manuelle Veränderung des Leistungsverbrauchs einer steuerbaren oder nicht-steuerbaren elektrischen Last (z.B. Dimmen einer Beleuchtung, Einschalten eines Backofens etc.). Der Gegenstand der vorliegenden Erfindung ist somit besonders kompatibel mit jeglichem bestehenden Smart-Home-System.

## Patentansprüche

1. Steuersystem (100) zum Steuern eines lokalen Stromnetzes (1), welches an einem Netzanschlusspunkt (2) mit einem öffentlichen Stromversorgungsnetz (3) verbunden ist, umfassend:
eine Laststeuereinrichtung (110), welche dazu eingerichtet ist, einen Leistungsverbrauch und/oder eine Leistungsabgabe von steuerbaren elektrischen Lasten und/oder steuerbaren elektrischen Quellen (140-180) des lokalen Stromnetzes (1) zu steuern; und
eine Recheneinrichtung (120), welche dazu eingerichtet ist, ein Anforderungssignal (71) von außerhalb des lokalen Stromnetzes (1) zu empfangen, wobei das Anforderungssignal eine Information über einen Leistungstransfer in mindestens einem Zeitraum umfasst;
wobei die Recheneinrichtung (120) weiterhin dazu eingerichtet ist, Steuersignale (72) zu erzeugen, welche dazu ausgebildet sind, die Laststeuereinrichtung (110) anzuweisen, die steuerbaren elektrische Lasten und/oder elektrischen Quellen (140-180) des lokalen Stromnetzes (1) derart zu steuern, dass in dem mindestens einen Zeitraum an dem Netzanschlusspunkt (2) ein Leistungstransfer (81) gemäß dem Anforderungssignal (71) bereitgestellt wird.

2. Steuersystem (100) nach Anspruch 1,
wobei die Laststeuereinrichtung dazu eingerichtet ist, in Abhängigkeit von den Steuersignalen (72) mindestens eine energiespeicherfreie elektrische Last (160-180) zu steuern.

3. Steuersystem (100) nach Anspruch 1 oder 2,
wobei die Recheneinrichtung (120) außerdem dazu eingerichtet ist, ein Anfragesignal (73) zu empfangen, welches Randbedingungen eines potenziellen Anforderungssignals (71) umfasst; und
zu prüfen, in welchem Rahmen den Randbedingungen durch die Laststeuereinrichtung (110) entsprochen werden kann und ein darauf basierendes Informationssignal (74) zu erzeugen und
an einen Empfänger außerhalb des lokalen Stromnetzes (1) zu übersenden, insbesondere an einen Absender des Anfragesignals (73).

4. Steuersystem (100) nach Anspruch 1 oder 2,
wobei die Recheneinrichtung (120) außerdem dazu eingerichtet ist, zu prüfen, in welchem Rahmen Randbedingungen eines potenziellen Anforderungssignals (71) durch die Laststeuereinrichtung (110) entsprochen werden kann und ein darauf basierendes Informationssignal (74) zu erzeugen und auszusenden, insbesondere regelmäßig oder ereignisbasiert.

5. Steuersystem (100) nach Anspruch 3 oder 4,
wobei das Informationssignal (74) ein Leistungsband als Funktion der Zeit anzeigt, innerhalb welches ein Leistungstransfer (81) an dem Netzanschlusspunkt (2) jeweils stattfinden kann und/oder einen Maximalenergiewert, welcher innerhalb eines Zeitraums transferiert werden kann.

6. Steuersystem (100) nach einem der Ansprüche 1 bis 5,
wobei die Laststeuereinrichtung (110) dazu eingerichtet ist, eine Leistungs-Basislinie (80) zu erzeugen, welche eine Vorhersage des aktuell geplanten Leistungstransfers (81) an dem Netzanschlusspunkt (2) als Funktion der Zeit (t) umfasst, und wobei die Recheneinrichtung (120) dazu eingerichtet ist, die Laststeuereinrichtung (110) basierend auf dem Anforderungssignal (71) derart zu steuern, dass die Leistungs-Basislinie (80) verändert wird, insbesondere zumindest abschnittsweise um eine Konstante in positiver oder negativer Richtung verschoben wird und/oder zumindest abschnittsweise auf eine Konstante gesetzt wird.

7. Steuersystem (100) nach einem der Ansprüche 1 bis 6,
wobei die Laststeuereinrichtung (110) dazu eingerichtet ist, die elektrischen Lasten und/oder Quellen (140-180) nach Maßgabe einer Prioritätenliste zu steuern, welche durch einen Benutzer über eine Benutzerschnittstelle (112) anpassbar ist.

8. Steuersystem (100) nach einem der Ansprüche 1 bis 7,
wobei die Recheneinrichtung (120) in die Laststeuereinrichtung (110) integriert ist.

9. Steuersystem (100) nach einem der Ansprüche 1 bis 8, aufweisend eine Mehrzahl von Laststeuereinrichtungen (110), welche je einem lokalen Stromnetz (1) einer Mehrzahl von lokalen Stromnetzen (1) zugehören, wobei jede der Laststeuereinrichtungen (110) zum Steuern eines Leistungsverbrauchs (83) und/oder einer Leistungsabgabe (82) von steuerbaren elektrischen Lasten und/oder elektrischen Quellen (140-180) des jeweils zugehörigen lokalen Stromnetzes (1) eingerichtet ist; und
wobei die Recheneinrichtung (120) dazu eingerichtet ist, Steuersignale (72) für jede der Laststeuereinrichtungen (110) zu erzeugen.

10. Verfahren zum Steuern mindestens eines lokalen Stromnetzes (1), welches an einem Netzanschlusspunkt (2) mit einem öffentlichen Stromversorgungsnetz (3) verbunden ist, umfassend:
Empfangen (S11) eines Anforderungssignals (71) von außerhalb des lokalen Stromnetzes (1), wobei das Anforderungssignal (71) eine Information über einen Leistungstransfer in mindestens einem Zeitraum umfasst; und
Steuern (S13) von steuerbaren elektrische Lasten und/oder elektrischen Quellen (140-180) des lokalen Stromnetzes (1) durch eine Laststeuereinrichtung (110) des lokalen Stromnetzes (1) derart, dass in dem mindestens einen Zeitraum an dem Netzanschlusspunkt (2) ein Leistungstransfer (81) gemäß dem Anforderungssignal (71) bereitgestellt wird.

11. Verfahren nach Anspruch 10, wobei das Steuern (S13) derart erfolgt, dass eine Leistungs-Basislinie (80) der Laststeuereinrichtung (110), welche eine Vorhersage des aktuell geplanten Leistungstransfers an dem Netzanschlusspunkt (2) als Funktion der Zeit (t) umfasst, verändert wird, um eine veränderte Leistungs-Basislinie (86) zu erzeugen, wobei die Leistungs-Basislinie (80) insbesondere zumindest abschnittsweise um eine Konstante in positiver oder negativer Richtung verschoben wird und/oder zumindest abschnittsweise auf eine Konstante gesetzt wird.

12. Verfahren nach Anspruch 10 oder 11, außerdem umfassend: Erzeugen und Aussenden (S10) des Anforderungssignals (71) durch ein Virtuelles-Kraftwerk-Steuersystem (5).

13. Verfahren nach Anspruch 12, außerdem umfassend:
Erzeugen und Aussenden (S1) eines Anfragesignals (73), welches Randbedingungen eines potenziellen Anforderungssignals (71) umfasst, durch das Virtuelles-Kraftwerk-Steuersystem (5);
Prüfen (S2), in welchem Rahmen den Randbedingungen durch eine Laststeuereinrichtung (110) mindestens eines lokalen Stromnetzes (1) entsprochen werden kann;
Erzeugen und Übersenden (S4) eines darauf basierenden Informationssignals (74) an das Virtuelles-Kraftwerk-Steuersystem (5);
wobei das Erzeugen und Aussenden (S10) des Anforderungssignals (71) durch das Virtuelles-Kraftwerk-Steuersystem (5) basierend auf dem Informationssignal (74) durchgeführt wird.

14. Verfahren nach Anspruch 13, außerdem umfassend:
Prüfen (S2), in welchem Rahmen Randbedingungen eines potenziellen Anforderungssignals (71) durch die Laststeuereinrichtung (110) entsprochen werden kann; und
Erzeugen und Aussenden (S4) eines darauf basierenden Informationssignals (74) an ein Virtuelles-Kraftwerk-Steuersystem (5), insbesondere regelmäßig oder ereignisbasiert.

15. Computerprogrammprodukt (200), umfassend ausführbaren Programmcode (250), welcher dazu ausgelegt ist, wenn er von einer Rechenvorrichtung ausgeführt wird, das Verfahren gemäß einem der Ansprüche 10 bis 14 durchzuführen.
